# EUROPEAN PATENT SPECIFICATION

(11) **EP 3 648 950 B1**
(45) Date of publication and mention of the grant of the patent: **18.05.2022**
(21) Application number: 18749178.2
(22) Date of filing: 06.07.2018
(51) Int. Cl.: B29C 64/124, B29C 64/364, B29C 64/245, B33Y 30/00

(54) **APPARATUS TO CREATE OBJECTS AND SEMI-RIGID SUBSTRATE THEREFOR**
VORRICHTUNG ZUR ERZEUGUNG VON GEGENSTÄNDEN UND HALBSTARRES SUBSTRAT DAFÜR
APPAREIL DE CRÉATION D'OBJETS ET SUBSTRAT SEMI-RIGIDE POUR CELUI-CI

(30) Priority: 07.07.2017 NL 2019204
(43) Date of publication of application: 13.05.2020
(73) Proprietor: Atum Holding B.V., 2741 PG Waddinxveen (NL)
(72) Inventor: BUDEL, Tristram, 5044 CC Tilburg (NL)
(74) Representative: Grootscholten, Johannes A.M.
(86) International application number: PCT/NL2018/050448
(87) International publication number: WO 2019/009725

(56) References cited:
- US-A1- 2011 089 610
- US-A1- 2015 064 298
- US-A1- 2015 231 831
- US-A1- 2016 046 080

## Description

The present disclosure relates to additive manufacturing, for instance using a three dimensional (3D) printer, where an object is built using a layer by layer technique as well as continuous growth of an object from a reference surface, on or under a substrate.

In additive manufacturing using liquid/paste like materials, a reference surface or carrier as a substrate for an object to be manufactured, constructed or built is preferable. In prior art, to the best knowledge of the inventors of the present disclosure, in 3D printer and in other applications as well, the reference layer, carrier or substrate is always a hard, rigid, flat plate or the like component. This reference surface is used to define both the layer thickness and the surface properties of the applied layer. Once the layer is cured and/or added to the object to be manufactured the layer has to be released from the reference surface. Most often, if not always, the reference surface is removed immediately after application of the layers needed to create the object to be manufactured.

In order to obtain a proper layer on the reference layer, the reference surface should be flat and smooth within tolerance and should also not adhere to the layer when the layer is being cured on the reference surface, which is why always a hard, rigid and flat reference surface is employed as a substrate. As an example reference is made here to US-2011/089610, which discloses general configurations for a substrate and the preamble of claim 1.

At the stage after manufacturing the object on the reference surface, a problem arises that the reference surface and the manufactured object at their interface have hard and rigid surfaces, which perfectly correspond with each other and that there is no significant space there between. Consequently, the reference surface and the object manufactured thereon cannot be separated freely or easily. Separation is normally inhibited by vacuum forces (pressure due to the environment). These release resisting forces need to be sufficiently low to be functional for additive manufacturing and allow release of the object from the reference surface. For example, if the release resisting force is higher than the weakest point of tensile strength in the manufactured object or model, the created object or model might break or tear. If the release resisting force is higher than the strength of the reference layer (or of the carrier or the substrate), the substrate might be compromised. If the release resisting force is higher than the force that the linear actuator can produce, the layer will not release, thus the object will not be built without being able to release it from the substrate, which therefore then has to become an integral part of the object.

One potential solution to this problem according to the present disclosure is to ensure that at least the reference surface has rubber like properties so that it is flexible or that the manufactured model is flexible. When the reference layer is made to be flexible, this allows the reference layer to be - so to speak - peeled off the manufactured object. A challenge with both these proposals is that only limited numbers of materials are available for example for 3D printers and that these materials in many cases do not exhibit the final desired properties. For example, when manufacturing a prosthetic tooth by 3D printing, the manufactured end product should not be flexible.

According to the present disclosure, the solution presented is defined in the appended independent claim. Any substrate or coating thereon can be used to impart a desired degree of flexibility. In addition, a direction of release of the object from the release layer may be set or be controlled in order to control the release speed and generated forces.

This solution is applicable in both top down as well as bottom up style 3D printers.

It is possible to specifically use a flexible glass like material as the substrate, this is an amorphous ceramic material that is highly optical transparent to pass an excitation, such as laser, with as little inhibition as possible. This specific material is used because it is extremely flat and in bulk very rigid. By applying an appropriate thin substrate, it being so thin gives the system enough flexibly to provide an improved and acceptable release.

Key is that the substrate is thin enough to be sufficiently flexible, but thick enough to be sufficiently rigid. In the alternative, a coating can be deployed on a rigid inflexible material to impart a desired degree of flexibility. Therefore the present disclosure allows for the substrate to be itself inherently flexible and/or for a coating to provide the desired degree of flexibility.

Flexibility of the substrate and/or a coating thereon enables the reduction of the release forces. A degree of rigidity supplies the correct geometry during the formation of a layer, and potentially also maneuvering after production, allowing the object formed to be manipulated during rinsing and severing processing steps while being held by the substrate.

When the cured object and more in particular the contact layer of the object on the substrate is pulled away from the substrate, the substrate basically bends in the direction of the release to peal the layer from the substrate.

This principle can be achieved by use of many different kinds of substrate, depending on the application. The choice for substrate can be based on transparency to excitation radiation or certain chemicals. As an example monocrystalline Silicon can be used in a sufficiently thin layer, being both strong for handling and flexible for severing the object from the substrate. Silicon is transparent to certain wavelength areas of the electromagnetic spectrum.

In envisaged applications it's possible to use a glass like material for its UV transmissive properties. Other materials, such as plastics, metals, ceramics and elements might also be used for this purpose.

The surface geometry of the substrate will serve as the base geometry of every added layer. In specific embodiments an extremely flat substrate surface may be required.

When a first layer is cured on the substrate, it is adapted to the geometry of the substrate, even though the two surfaces might have no chemical bonds they are held together by small forces and vacuum. The combination of a relatively large surface area and the many relatively small forces and vacuum results in a large net force maintaining the substrate and the created object together and resisting release of a created object from the substrate.

If the many small forces are disregarded, the vacuum force alone equals Atm pressure^{∗}surface area. In practice this means that when an object is produced on the macro scale which at some point has a contact cross-section surface area of 10x10xm or 100cm2 the force generated during a double hard surface release will be roughly 100kg. Needless to say subjecting the additive manufacturing machine and the object to be manufactured to such large forces repeatedly during the entire build of the object creates large complications.

However, according to the present disclosure, this vacuum force can be overcome by simply pealing the substrate from the edge of the base layer of a created object. Optionally, pressure surrounding the substrate may be lowered to facilitate release of the substrate. To this end the substrate may be arranged in a pressure chamber in which pressure can be lowered around the substrate.

Thus when the layer is pulled away from the substrate, the substrate bends towards the direction of the release peeling from the edges to the center. This pealing is brought in effect because the force required to bend the substrate are larger towards the edges of the substrate than in the center due to simple mechanics.

The surface energy of the substrate is determined by the release coating applied to the substrate. In specific embodiments a Teflon coating, for example FEP, or the like may be deployed. This material has a very low specific surface energy and the material itself is generally very chemically stable. Even though a disadvantage of such material may be that this material is not very scratch resistant, it may well serve to form a replaceable release coating.

Due to the low surface energy of the Teflon layer it is very unlikely that this material will form any bond or attraction with any material that is likely to be used in embodiments of additive manufacturing systems.

Other coatings may be used for their properties. This can be metallic or ceramic coatings as well as other organic/plastic coatings. For example, PET can be used, being less chemically inert but more scratch resistant and though while having relatively similar optical properties with the current application in mind.

Teflon on its own may not exhibit the properties required for additive manufacturing. More in detail, when provided in a sufficiently thick layer to provide de needed rigidity in order to produce the desired surface geometry, no light with the proper wavelength may pass there through. Although Teflon is highly trans missive it also has significant scattering properties. However, when a thin enough coating is applied the light scattering properties are no longer dominant while retaining the surface properties. When Teflon is applied in a coating to or forms a substrate, the bulk properties of the substrate will remain dominant for the surface geometry while the chemical properties of the coating are dominant for the surface chemistry.

Clearly many different materials can be used in this configuration to supply the required surface chemistry, while a different but also large group of materials can be applied in this configuration as substrate.

In order to bond the coating to the substrate an adhesion layer can be used. As the physical as well as the chemical properties of both the coating and substrate might be incompatible a third and possible fourth layer may be needed to bond the coating to the substrate. A resulting configuration may exhibit some comparability with practice in the metal coating industry where an in-between metal coating is often used to adhere the final coating to the surface of the substrate.

If the bonding layer is sufficiently thin, only the chemical properties will be dominant. If thicker bonding layers are applied extra properties can be imparted to the system, allowing the bulk properties to become more prevalent.

In an embodiment based on Teflon and/or more in particular FEP, when the release coating or substrate is treated with an ozone plasma in order to activate the surface, a silicone adhesive layer may be applied to this oxidized surface, wherein this system is then laminated to the semirigid substrate, potentially, a Teflon/silicon film as a specialty tape may be employed.

Confidential experiments have shown that, in a system with a substrate and separate release coating and an intermediate adhesive layer, if the adhesive layer is thick enough, a factor of 10 thicker than the coating it is bonding, since this is a silicone rubber, extra flexibility/ surface softness can be acquired. In preferred embodiments the adhesive layer is thin enough to have negligible bulk properties.

In order to allow the bulk properties of the substrate material into full effect, ideally it would be free floating. Since this is unpractical, the substrate is suspended on or under a frame using a rubber like material.

Since the rubberlike material is relatively soft it allows the substrate to flex and bend freely whilst keeping it in place relative to the frame.

The properties of the support or suspension used to suspend or carry the substrate underneath or on the frame can thus contribute to the overall properties of the system. If this material is more rigid it would provide more resistance to the bending of the substrate, vice versa if the support or suspension is less rigid it would allow the substrate to bend more easily.

By using contrasting or mutually augmenting material properties, the net property of the release is formed by the sum of all the layers of the entire system, and - if present - the suspension or support connecting the substrate to the frame.

Another fact to be taken into account is the influence of the geometry of the adhesive layer on the structural properties of the adhesive, since the behavior of the adhesive is a function of the material properties and the geometry. Thus, in case of a soft rubber like material sandwiched between two hard surfaces, for instance two blocks of metal with a flat surface, the degree of springiness between the two layers and the amount of force required the vary the spacing between the two blocks provided by the rubber layer in between is a function of the geometry of the rubber layer, whereas the thickness of the rubber is larger the elastic property of the rubber layer would be more prevalent in the entire system. Vice versa using a very thin rubber layer, say a 100nm layer would result in negligible added elasticity tot the total system.

By applying a specific geometry to the adhesive layer, for example a framing bead of rubber like material of equal width suspending the substrate beneath the frame. Then significantly varying the height on one side of the frame opposed to the other side. The suspension or support then varies along the circumference thereof. This results in a system being more flexible on a side where the suspension or support is higher opposed to another side where the system is has a lower profile and is more rigid.

Extra variables can be added to the system by altering the geometry not in a singular dimension as stated above, but in a second and third dimension as well. As well as altering the density of the adhesive by for example variably induce gas bubbles in the adhesive to alter locally the bulk material properties.

This variable over the entire system can then be used to direct the release, when releasing a base layer of a created object from the substrate.

If in the simple example the substrate bends easier towards the direction of the release, this side is expected to hold on to the object's base layer longer than the more rigid side of the system, thus causing a directional orientation of release.

This principle can be described as a virtual tilt where, due to force distribution, the net effect of a tilting substrate is generated without even a physical tilting taking place.

The system may comprise a tilt mechanism to enhance the peeling effect and more rigorously directing the release.

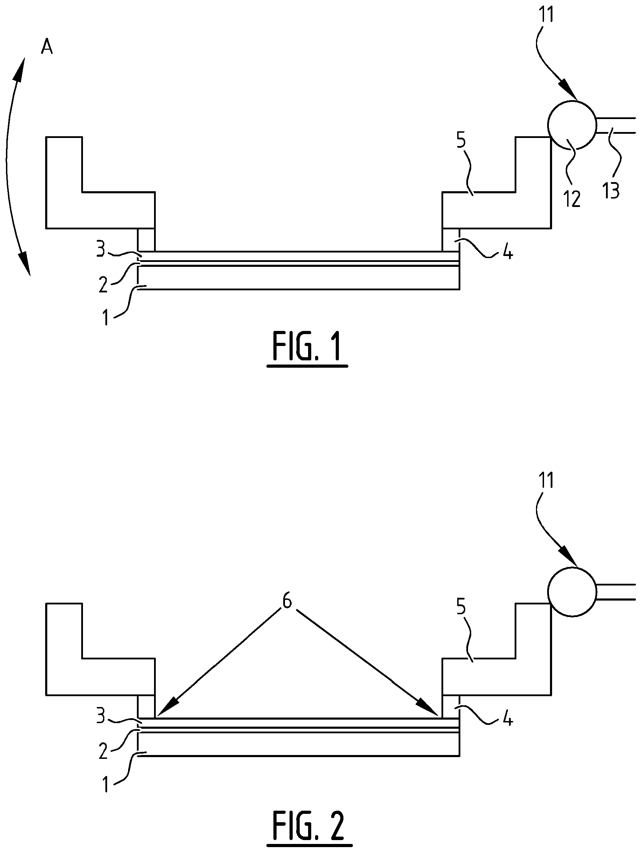

The frame holding the substrate is then held on one side while the opposing side is allowed to freely mechanically move a predetermined distance, for example along a swivel path as according to arrow A in figure 1.

The desired release of a base layer of a created product is achieved by a combination of a selection or all of the properties described above under atmospheric or pressurized conditions.

Another aid to reducing the release forces generated by the separation of a layer and the substrate is to reduce the surrounding pressure. As the net force generated is a result of, of course the viscosity of the surrounding liquid but also the ambient pressure of the system. To this end the substrate may be arranged in a pressure chamber in which pressure can be lowered around the substrate.

As the distance between the cured base layer on the substrate and the substrate is effectively zero, when pulled apart a high vacuum is created, the force of which is the surface area times the pressure differential. Thus lowering the ambient pressure can significantly reduce the generated vacuum forces.

Specific to certain embodiments, a paste coating system faces significant restrictions. The system must fit inside a limited amount of space and has to be reliable and cost effective.

Most other systems require bulky setups which are costly, do not fit in some embodiments of machines and are not chemically inert enough to fit customary requirements.

Other factors in play are contamination risks and ease of use.

In addition, compared to the prior systems which can only use relatively low viscosity liquids for solidifying or setting using the excitation, the system of the present disclosure allows use of high viscosity liquids and thixotropic liquids whereby the materials generally can be free flowing. This beneficial effect may be achieved by combining the curing or hardening excitation, such as a laser, with a global and/or local applicator

A system according to the present disclosure may have a modular design, where the standard basin that holds a liquid in which the substrate is submerged, can easily be replaced with another system such as this paste coating added functionality.

In a particular embodiment, a system according to the present disclosure may use a bidirectional squeegee or global paste layer applicator that applies an appropriate layer over essentially the entire substrate in thickness of material in both directions of travel. Near the end of the travel length this squeegee is mechanically lifted over the bulk of the material that travels ahead of the squeegee during application of the layer.

During the production process the excess amount that travels in front of the squeegee is monitored and if needed more material is added.

An additional or alternative local applicator may be provided to more finely alter the properties, such as color, of the layer and even within a layer at a height above or below the substrate by applying one or multiple components locally before the layer is effectively added to the object that is manufactured, by deploying a curing excitation. Likewise, the global applicator may be configured to form layer upon layer of per layer different material, and/or materials of different colors. In particular the combination of an applicator with curing excitation, such as a laser, also involving an resilient suspension or support, is novel over US-2011/089610, wherein the substrate is fixedly mounted without any resilience or flexibility in a bath of curable material for top-down or bottom-up 3D printing, whereas the skilled person would not have considered combining a local or global layer applicator with deployed excitation, because applicators are used commonly only for printing materials that cure based on ejection from a print head, which may be comparable with the global or local applicators of the present disclosure, but function without a focused or concentrated curing excitation. Moreover, providing resilience in the suspension of the substrate goes against prejudices of the skilled person, as this would have been anticipated to result in lower accuracy, but may provide the below discussed benefits in terms of release of the product, while facilitating deployment of local and/or global applicators in that any force or pressure exerted thereby onto the substrate is absorbed without risk of dislocation of the substrate. Such resilience is by no means embodied as a tilting or hinged connection as known from US-2011/089610, but a frame of the substrate may be connected to a hinge. In the present disclosure, the resilience of a suspension allows the easier release, as discussed below, as well as yielding of the substrate under pressure of force exerted by a local and/or global applicator, if provided.

In a preferred embodiment a white ceramic slurry is used to create the base of the thin coating. Then a jetting or spraying head may apply for example pigments locally. This way a full color dense ceramic object can be created. In the same line different materials can be applied per layer locally to induce different material properties.

In the appended drawing, to which the scope of the present disclosure is not limited and wherein similar or identical elements, components and aspects may be designated using the same or corresponding reference signs, and in which
figures 1, 3 - 5 show a succession of production steps using a 3D printer; and
figure 2 exhibits a slightly modified configuration relative to the embodiment of figure 1.

In the figures, the following elements, components and aspects are exhibited:
1 - plate, which may be conventionally hard, flat, and rigid or flexible itself, or just somewhat flexible and thus semi-flexible;
2 - adhesive layer;
3 - release coating;
4 - rubber connection;
5 - frame of metal or glass or the like;
6 - rubber connections of differing thicknesses;
7 - applicator to deposit a curable paste material;
8 - film of curable paste deposited by applicator 7;
9 - locally deposited curable paste material;
10 - additional applicator to locally deposit curable paste material, for example for spray depositing, ink jet depositing, powder depositing, powder vaporizing, drip depositing, and the like; and
11 - hinge mechanism

In figure 1, a substrate 1, 2, 3 embodying a reference layer is mounted in frame 5 of for example glass or metal, via at least one flexible support or suspension connection 4, for example of rubber. The substrate comprises a plate 1, and adhesive layer 2 and a release coating 3. Plate 1 may be conventionally hard, flat, and rigid or flexible itself, or just somewhat flexible and thus semi-flexible. Release coating 3 is provided to facilitate easier release of a manufactured object (not shown) from plate 1, such as Teflon, FEP, PET. The material characteristics of the release coating will depend on the material for the object to be manufactured, and may correspond with the mechanism of creating the object, such as lasers influence, heat and selection of appropriate material for the release coating lies well within the normal skill of the expert in the field of base materials for, for example, 3D printers.

If an object is to be manufactured in a position hanging from the plate, the adhesive layer 2 and release coating 3 may be arranged on the underside of the plate 1, in addition to the layer 12 and coating 3 of the appended drawings, or as an alternative.

Adhesive layer 2 is provided to permanently or temporarily secure release coating 3 on plate 1, and is optional because other ways op securing the release coating to the plate may be deployed.

If plate 1 is hard, rigid, stiff, and flat, and designed to be re-used, the adhesive layer 2 may secure the release coating 3 to plate 1 temporarily, to allow a manufactured product (not shown) to be separated from the plate 1 with the release coating 3 on the manufactured product. In such an embodiment, plate 1 may be directly attached to the connection 4 and adhesive layer 2 and release coating 3 may extend within the confines of the attachment of plate 1 to connections 4. In contrast, if plate 1 is flexible or semi-flexible, then adhesive layer 2 may serve to permanently attach release coating 3 to plate 1, and adhesive layer 2 and release coating 3 may extend as depicted in the appended drawings between plate 1 and connection 4.

Flexible connection 4 of for example rubber results in a configuration running against the skilled persons assumptions about pre-requisites imposed on a carrier formed by the frame 5 and the plate 1, as this flexible connection would seem to allow for some play and consequently also inaccuracies, in particular is the plate 1 is intended to be displaced relative to the applicators 7, 10 (to be described further down in this disclosure). Also, when applicators 7, 10 are moved relative to a stationary plate 1, machine vibrations may result in similar inaccuracies. Thus it has always been the skilled person's natural inclination and prejudice to configure the assemblies in a 3D printer as sturdy and inflexible as possible.

The frame 5 is connected with a hinge mechanism 11, allowing the frame 5 to be tilted along arrow A. The schematically represented hinge mechanism 11 may comprise a hinge 12 and a connection rod 13.

Figure 2 exhibits a configuration with a varying height of the connection 6 of for example rubber, instead of the uniform height of connection 4 in figure 1. On the left side in figure 2, the connection 6 is higher than on the right side

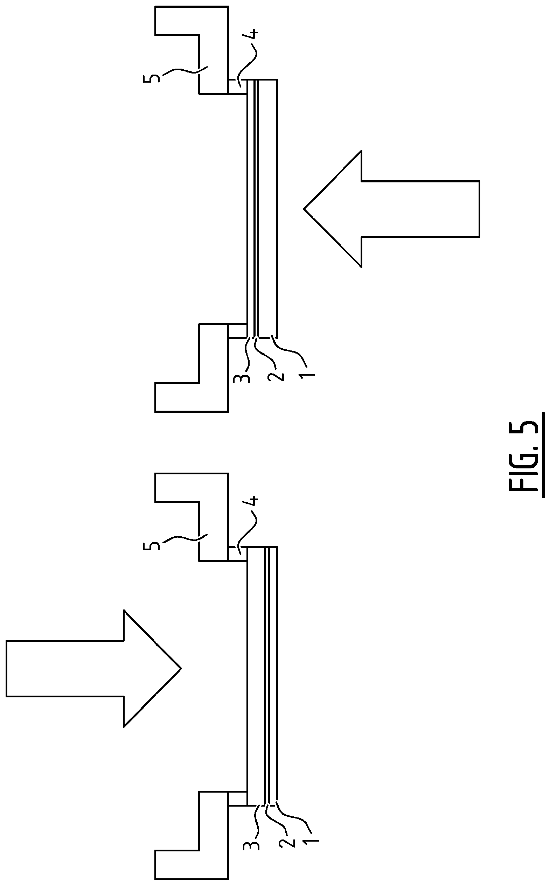

Both in Figures 1 and 2, frame 5 and plate 1 define an accommodation, in or on which objects (not shown) may be created layer-by-layer or as a whole, for instance deploying curing excitation or activation, like heat, laser beams, and the like, from the bottom or from above, as indicated in figure 5. The accommodation defined by plate 1 and frame 5 is essentially cup shaped, as evident from the appended drawing depicting the configuration in cross sectional side view. However, any top view shape may be employed, for example rectangular, square, oval, and the like.

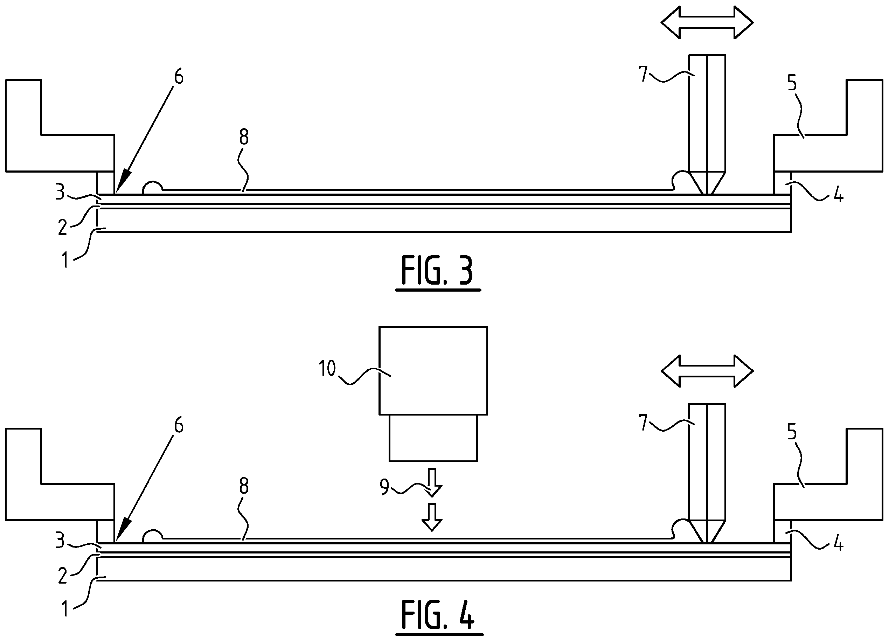

Figure 3 shows a global paste layer applicator 7 to arrange at least an initial layer 8 of curable material on release coating 3 for forming a base layer of a product to be manufactured (not shown). The applicator 7 may arrange multiple layers of curable material 8 on top of one another. The precise locations, where the curable material is cured, is determined through curing excitation from above or below, as indicated in figure 5, such as laser, heat and the like. By locally applying the curing excitation or other stimulus for setting a desired pattern and portion of the layer 8 of curable material, the object to be manufactured is created layer by layer. Similarly, the product to be manufactured can be created as a whole, for example by constructing the cured material with crossing laser beams (not shown). If applying full layers 8 of curable material as in figure 3 results in material loss, or for any other reason, a more locally oriented local paste layer applicator 10 may be deployed as an addition or alternative to supply curable material locally, where the excitation is anticipated to cure the material for creating the object to be manufactured. This doesn't require a full layer 8 as in figure 3 from the global paste layer applicator 7. A combination of full layer laying applicator 7 and local applicator 10 or either of both is encompassed within the scope of the present disclosure.

Likewise, submerging the accommodation defined by at least plate 1 and frame 5 is also encompassed, where crossing of a plurality of at least two curing activating or curing excitations from differing directions determines where curable material is set, and each of the excitations on its own is insufficient to achieve this curing or setting on its own, such as crossing laser beams. In such an embodiment the accommodation may be submerged in a bath of curable or setting material without the system having the applicator 7 for provision of the global layer 8 and / or the additional applicator 10 for provision of the curable material 9 more focused on the location where curing, setting or hardening of the material 9 is anticipated to occur.

Based on the above disclosure, wherein the skilled person finds sufficient grip to implement the present disclosure by deploying average skill, the scope is be defined below in the appended claims, where the present disclosure is not limited to the above described embodiment of the appended drawings and includes alternative and additional embodiments relative to those of the embodiment description. For example the release coating may be on the underside of the plate and manufacture of the object is performed with the object suspended from the combination of the plate and release coating. An adhesive layer is optional. Excitation, hardening or curing the material to create the object to be manufactured can be performed with any stimulus, such as lasers, heat, and the like. Further it is noted that the plate and release coating may be embodied as a singular plate of appropriate material to exhibit flexibility and/or adherence to the product to be manufactured during manufacture and/or release properties and/or any further desired property. The optional adhesive layer and release coating may be removed from the plate after manufacture of an object and discarded, to be replaced for subsequent manufacture of a further object. The plate can then be re-used very quickly.

## Claims

1. Apparatus to create an object through excitation, curing or hardening of material, such as a three dimensional printer, comprising:
- a substrate of at least a plate (1) defining a reference surface;
- a source of excitation, curing and/or hardening focussed above or below the substrate, and
- a frame (5), wherein the substrate is supported on or suspended under the frame (5),
**CHARACTERIZED BY** a resilient suspension or a resilient support (4), for example of rubber or the like, arranged between the frame (5) and the substrate.

2. The apparatus of claim 1, wherein the substrate is arranged in a pressure chamber to reduce an ambient pressure surrounding the substrate.

3. The apparatus of claim 1 or 2, comprising a global paste layer applicator (7).

4. The apparatus of any one or more than one of the preceding claims, comprising a local paste layer applicator (10).

5. The apparatus of any one or more than one of the preceding claims, wherein the plate is flexible.

6. The apparatus of any one or more than one of the preceding claims, further comprising a release coating (3) on a side of the plate for manufacturing the object and configured to facilitate release of a manufactured object from the plate (1).

7. The apparatus of claim 6, wherein the release coating is arranged on the plate using an adhesive layer.

8. The apparatus of claim 6 or 7, wherein the release coating is removable from the plate.

9. The apparatus of claim 6 or 7, wherein the release coating is an integral part of the plate.

10. The apparatus of any one or more than one of the preceding claims, wherein at least one of the substrate and the release coating thereon according to any one or more than one of claims 6 - 9 comprises any one or more than one of the materials from a group comprising: silicon, more in particular monocrystalline silicon, Teflon or a Teflon like material, for example FEP, metal, glass, ceramic, as well as other organic/plastic coatings, such as PET.

11. The apparatus of any one or more than one of the preceding claims, wherein a height profile of the suspension or support varies along a circumference thereof.

12. The apparatus of any one or more than one of the preceding claims, further comprising a tilt mechanism, connected to the frame.

## Patentansprüche

1. Eine Vorrichtung zur Erzeugung eines Objekts durch Anregung, Aushärtung oder Härtung von Material, wie ein Dreidimensionaldrucker, aufweisend:
- ein Substrat aus mindestens einer Platte (1), die eine Bezugsfläche bildet;
- eine Quelle zur Anregung, Aushärtung und/oder Härtung, die über oder unter dem Substrat fokussiert ist, und
- einen Rahmen (5), wobei das Substrat auf dem Rahmen (5) gestützt oder darunter aufgehängt ist,
**GEKENNZEICHNET DURCH**
eine elastische Aufhängung oder elastische Stütze (4) aus Gummi oder dergleichen, die zwischen dem Rahmen (5) und dem Substrat angeordnet ist.

2. Die Vorrichtung nach Anspruch 1, wobei das Substrat in einer Druckkammer angeordnet ist, um den Umgebungsdruck, der das Substrat umgibt, zu verringern.

3. Die Vorrichtung nach Anspruch 1 oder 2, aufweisend einen globalen Pastenschicht-Applikator (7).

4. Die Vorrichtung nach einem oder mehreren der vorhergehenden Ansprüche, aufweisend einen lokalen Pastenschicht-Applikator (10).

5. Die Vorrichtung nach einem oder mehreren der vorhergehenden Ansprüche, wobei die Platte flexibel ist.

6. Die Vorrichtung nach einem oder mehreren der vorhergehenden Ansprüche, weiter aufweisend eine Trennbeschichtung (3) auf einer Seite der Platte zur Herstellung des Objekts und die dazu ausgebildet ist, die Trennung eines hergestellten Objekts von der Platte (1) zu erleichtern.

7. Die Vorrichtung nach Anspruch 6, bei der die Trennbeschichtung mit Hilfe einer Klebeschicht auf der Platte angeordnet ist.

8. Die Vorrichtung nach Anspruch 6 oder 7, wobei die Trennbeschichtung von der Platte entfernbar ist.

9. Die Vorrichtung nach Anspruch 6 oder 7, wobei die Trennbeschichtung ein integraler Bestandteil der Platte ist.

10. Die Vorrichtung nach einem oder mehreren der vorhergehenden Ansprüche, wobei mindestens eines von dem Substrat und der darauf befindlichen Trennbeschichtung nach einem oder mehreren der Ansprüche 6 bis 9 igendeines oder mehrere der Materialien aus einer Gruppe aufweist, aufweisend: Silizium, insbesondere monokristallines Silizium, Teflon oder ein teflonähnliches Material, zum Beispiel FEP, Metall, Glas, Keramik, sowie andere organische/plastische Beschichtungen, wie PET.

11. Die Vorrichtung nach einem oder mehreren der vorangehenden Ansprüche, wobei das Höhenprofil der Aufhängung oder des Trägers entlang ihres Umfangs variiert.

12. Die Vorrichtung nach einem oder mehreren der vorhergehenden Ansprüche, weiter aufweisend einen Kippmechanismus, der mit dem Rahmen verbunden ist.

## Revendications

1. Appareil pour créer un objet par excitation, polymérisation ou durcissement d'un matériau, tel qu'une imprimante tridimensionnelle, comprenant :
- un substrat d'au moins une plaque (1) définissant une surface de référence ;
- une source d'excitation, de polymérisation et/ou de durcissement focalisée au-dessus ou au-dessous du substrat, et
- un châssis (5), dans lequel le substrat est supporté sur le châssis (5) ou suspendu sous celui-ci,
**caractérisé par**
une suspension souple ou un support souple (4), par exemple, en caoutchouc ou similaire, agencé(e) entre le châssis (5) et le substrat.

2. Appareil selon la revendication 1, dans lequel le substrat est agencé dans une chambre de pression pour réduire une pression ambiante entourant le substrat.

3. Appareil selon la revendication 1 ou 2, comprenant un applicateur de couche de pâte global (7).

4. Appareil selon l'une quelconque ou plusieurs des revendications précédentes, comprenant un applicateur de couche de pâte local (10).

5. Appareil selon l'une quelconque ou plusieurs des revendications précédentes, dans lequel la plaque est flexible.

6. Appareil selon l'une quelconque ou plusieurs des revendications précédentes, comprenant en outre un revêtement de libération (3) sur un côté de la plaque pour fabriquer l'objet et configuré pour faciliter la libération d'un objet fabriqué de la plaque (1).

7. Appareil selon la revendication 6, dans lequel le revêtement de libération est agencé sur la plaque en utilisant une couche adhésive.

8. Appareil selon la revendication 6 ou 7, dans lequel le revêtement de libération peut être retiré de la plaque.

9. Appareil selon la revendication 6 ou 7, dans lequel le revêtement de libération fait partie intégrante de la plaque.

10. Appareil selon l'une quelconque ou plusieurs des revendications précédentes, dans lequel au moins l'un parmi le substrat et le revêtement de libération sur celui-ci selon l'une quelconque ou plusieurs des revendications 6 à 9 comprend l'un quelconque ou plusieurs des matériaux issus d'un groupe comprenant : le silicium, et plus particulièrement le silicium monocrystallin, le Téflon ou un matériau analogue au Téflon, par exemple, le FEP, le métal, le verre, la céramique ainsi que d'autres revêtements organiques/plastiques, tels que le PET.

11. Appareil selon l'une quelconque ou plusieurs des revendications précédentes, dans lequel un profil de hauteur de la suspension ou du support varie selon une circonférence de celle-ci ou celui-ci.

12. Appareil selon l'une quelconque ou plusieurs des revendications précédentes, comprenant en outre un mécanisme d'inclinaison, relié au châssis.
